# EUROPÄISCHE PATENTSCHRIFT

(11) **EP 3 191 328 B1**
(45) Veröffentlichungstag und Bekanntmachung des Hinweises auf die Patenterteilung: **01.07.2020**
(21) Anmeldenummer: 15763217.5
(22) Anmeldetag: 21.08.2015
(51) Int. Cl.: B60H 1/00, B60H 1/32

(54) **WÄRMEPUMPENANLAGE ZUR KLIMATISIERUNG EINES FAHRZEUGES UND VERFAHREN ZUM BETRIEB EINER SOLCHEN WÄRMEPUMPENANLAGE**
HEAT PUMP SYSTEM FOR CLIMATE CONTROL OF A VEHICLE, AND METHOD FOR OPERATING A HEAT PUMP SYSTEM OF THIS TYPE
INSTALLATION DE POMPE À CHALEUR PERMETTANT LA CLIMATISATION D'UN VÉHICULE ET PROCÉDÉ PERMETTANT DE FAIRE FONCTIONNER UNE POMPE À CHALEUR DE CE TYPE

(30) Priorität: 09.09.2014 DE 102014217960
(43) Veröffentlichungstag der Anmeldung: 19.07.2017
(73) Patentinhaber: Bayerische Motoren Werke Aktiengesellschaft, 80809 München (DE)
(72) Erfinder: SCHEDEL, Felix, 82131 Gauting (DE); HOFMANN, Philipp, 80993 München (DE); HORN, Oliver, 81475 Muenchen (DE); HERBOLZHEIMER, Robert, 82194 Groebenzell (DE); SATZGER, Peter, 86899 Landsberg am Lech (DE)
(86) Internationale Anmeldenummer: PCT/EP2015/069207
(87) Internationale Veröffentlichungsnummer: WO 2016/037828

(56) Entgegenhaltungen:
- EP-A1- 2 263 894
- WO-A1-02/092368
- DE-A1-102010 038 406
- FR-A1- 2 967 759
- FR-A1- 2 992 260

## Beschreibung

Die Erfindung betrifft eine Wärmepumpenanlage zur Klimatisierung eines Fahrzeuges, insbesondere Elektro- oder Hybridfahrzeug, mit einem Klimagerät, das einen Heizungswärmetauscher sowie einen Klimagerät-Verdampfer umfasst, mit einem Kältekreis, in dem der Klimagerät-Verdampfer sowie ein Kondensator angeordnet sind, mit einem NT-Kreis, in dem eine elektrische Leistungskomponente angeordnet ist, wobei die Wärmepumpenanlage zwischen einem Kühlbetrieb und einem Heizbetrieb umschaltbar ist. Desweitern betrifft die Erfindung ein Verfahren zum Betrieb einer solchen Wärmepumpenanlage.

Eine solche Wärmepumpenanlage ist beispielsweise in der WO 2011/029538 A1 offenbart. Ergänzend zu einer Ausnutzung von Umgebungswärme ist dort auch eine Ausnutzung der Abwärme beispielsweise einer Batterie zu entnehmen. Die Abwärme wird dabei einem Verdampfer eines Kältekreislaufs der Wärmepumpe zugeführt, über den das Kältemittel des Kältekreislaufs verdampft wird. Zur ergänzenden Ausnutzung der Umgebungswärme wird ein kühlerseitiger Wärmetauscher ebenfalls als Verdampfer für den Kältekreislauf eingesetzt. In den Kältekreislauf selbst ist weiterhin ein herkömmlicher Verdampfer eines Klimageräts zur Innenraum-Klimatisierung eingebunden. In einem Heizmodus zur Erwärmung des Innenraumes bei niedrigen Außentemperaturen wird dieser normale Verdampfer nicht aktiviert, also nicht vom Kältemittel durchströmt. Die Wärme wird vielmehr wahlweise über den der Batterie zugeordneten Verdampfer oder den kühlerseitigen Umgebungswärme-Verdampfer aufgenommen und über einen Kondensator an die Luft zur Innenraum-Beheizung abgegeben.

Allgemein ergibt sich bei Elektrofahrzeugen oder auch Hybridfahrzeugen das Problem, dass ein durchgängig Wärme produzierender Verbrennungsmotor und ein dazugehöriger Hochtemperaturkreis zumeist nicht vorhanden ist und die zum Heizen des Innenraumes des Fahrzeuges benötigte Wärme aus einer anderen Quelle entnommen werden muss. Als Wärmequellen bieten sich hierbei insbesondere elektrische Leistungskomponenten und, die üblicherweise im NT-Kreis, das heißt einem Niedertemperaturkreis oder auch einfach nur Kühlkreislauf angeordnet sind. Beispielsweise eine elektrische Antriebsmaschine, das heißt ein Elektromotor, oder auch elektrische Leistungskomponenten, wie beispielsweise Wechselrichter, Gleichstromwandler, Ladeelektronik oder dergleichen. Unter Umständen ist auch eine Nutzung der Wärme des Hochvoltspeichers, das heißt der Batterie des Fahrzeuges möglich.

So ist beispielsweise in der auf die Anmelderin zurückgehenden, unveröffentlichten DE 10 2013 206626.0 eine Wärmepumpenanlage zur Klimatisierung eines Fahrzeuges beschrieben, mit einem Heizbetrieb zur Erwärmung eines Fahrgastraumes, umfassend einen Kältekreislauf mit einem Kondensator zur Übertragung von Wärme aus dem Kältekreislauf in den Fahrgastraum sowie mit einem Klimagerät-Verdampfer zur Klimatisierung des Fahrgastraums. Als weiterer Verdampfer für eine Wärmeaufnahme in den Kältekreislauf ist ausschließlich zumindest ein innerer Verdampfer angeordnet, durch welchen Abwärme aus dem Fahrzeug nutzbar ist. Dadurch wird insbesondere das Auftreten einer Vereisung an einem Umgebungs-Wärmetauscher vermieden, da entweder auf einen solchen im Kältekreislauf gänzlich verzichtet wird oder aber da zumindest kein Umgebungs-Wärmetauscher im Kältekreislauf gegeben ist, der als Verdampfer zur Übertragung von Wärme aus der Umgebung in den Kältekreislauf genutzt wird. Um dennoch unabhängig von der jeweiligen Betriebssituation und den Umgebungsbedingungen den Fahrgastraum in gewünschter Weise auch bei geringen Außentemperaturen klimatisieren und insbesondere erwärmen zu können, werden im Heizbetrieb mehrere interne Wärmequellen des Fahrzeuges zur Erwärmung des Fahrgastraums genutzt.

Weitere Wärmepumpenanlagen sind in der FR 2 992 260 A1 und der FR 2 967 759 A1 beschrieben.

Die verschiedenen Wärmequellen müssen jedoch typischerweise jeweils separat Eingebunden werden, wodurch sich eine komplexe Verschaltung ergibt. Um insbesondere den Innenraum zu beheizen und gleichzeitig eine oder mehrere der Leistungskomponenten zu kühlen, ist nachteilig eine komplexe Verschaltung mit einer Vielzahl an Ventilen nötig.

Wie oben bereits angedeutet wird alternativ oder zusätzlich auch Wärme aus der Umgebungsluft entnommen. Diese Wärmequelle stellt jedoch aufgrund der möglicherweise stark wechselnden Außentemperatur oder einer möglichen Vereisung eines dazu vorgesehenen Wärmetauschers oder Wärmeübertragers eine unsichere Wärmeversorgung dar. Zudem ist das verwendete Kältemittel aufgrund von dessen Stoffeigenschaften möglicherweise lediglich oberhalb einer bestimmten Mindesttemperatur verwendbar. Zum Heizen bei niedrigen Temperaturen sind dann häufig zusätzliche Heizer, sogenannte Zuheizer notwendig, durch welche die Komplexität des Systems weiter erhöht wird und zusätzliche Kosten, zusätzliches Gewicht und zusätzlicher Bauraumbedarf entstehen.

Der Erfindung liegt daher die Aufgabe zugrunde, eine verbesserte Wärmepumpenanlage für ein Fahrzeug, insbesondere für ein Elektro- oder Hybridfahrzeug anzugeben, die möglichst einfach aufgebaut ist und ein Kühlen sowie ein Heizen des Innenraumes des Fahrzeuges ermöglicht.

Die Aufgabe wird erfindungsgemäß gelöst durch eine Wärmepumpenanlage mit den Merkmalen des Anspruchs 1 sowie ein Verfahren mit den Merkmalen des Anspruchs 14. Vorteilhafte Ausgestaltungen, Weiterbildungen und Varianten sind Gegenstand der Unteransprüche. Die im Zusammenhang mit der Wärmepumpenanlage genannten Weiterbildungen und Vorteile gelten dabei sinngemäß auch für das Verfahren und umgekehrt.

Die Wärmepumpenanlage ist zur Klimatisierung eines Fahrzeuges, insbesondere eines Elektro- oder Hybridfahrzeuges ausgebildet und weist ein Klimagerät auf, das einen Heizungswärmetauscher sowie einen Klimagerät-Verdampfer umfasst. Desweiteren weist die Wärmepumpenanlage einen Kältekreis auf, in dem der Klimagerät-Verdampfer sowie ein Kondensator angeordnet sind. Weiterhin weist die Wärmepumpenanlage einen NT-Kreis auf, in dem eine elektrische Leistungskomponente angeordnet ist. Die Wärmepumpenanlage ist zwischen einem Kühlbetrieb und einem Heizbetrieb umschaltbar. Zum Umschalten zwischen Heizbetrieb und Kühlbetrieb ist ein Umschaltventil angeordnet. In den NT-Kreis ist ein Kondensator zur Übertragung von Wärme in den NT-Kreis eingebunden sowie ein NT-Kühler. Im Heizbetrieb gibt der Kondensator Wärme in den NT-Kreis ab und von dort in einen Heizkreis, in dem der Heizungswärmetauscher angeordnet ist, und im Kühlbetrieb gibt der Kondensator Wärme über den NT-Kreis an den NT-Kühler ab, welcher die Wärme wieder an die Umgebung abgibt.

Die mit der Erfindung erzielten Vorteile bestehen insbesondere darin, dass ein Umschalten zwischen Heiz- und Kühlbetrieb mittels lediglich eines Umschaltventils erfolgt und der Kondensator durch Umschalten einerseits zur Wärmenutzung zwecks Innenraumbeheizung und andererseits zur Wärmeabgabe an die Umgebung verwendbar ist. Dabei sind der Kältekreis und der NT-Kreis besonders einfach ausgestaltet und die Wärmepumpenanlage ist aufgrund lediglich weniger benötigter Komponenten besonders kostengünstig. Als Kältemittel im Kältekreis sind vorteilhaft alle bekannten Kältemittel verwendbar, insbesondere die in Fahrzeugen gängigen Kältemittel R134a, R1234YF und R744.

Durch die Nutzung von Abwärme der Leistungskomponente ist weiterhin vorteilhaft die benötigte Wärmeaufnahme aus der Umgebung, insbesondere im Beharrungsbetrieb des Fahrzeuges derart reduziert, dass ein Vereisen des NT-Kühlers vermeidbar ist. Desweiteren ist hierdurch auch ein geringerer Luftdurchsatz durch den NT-Kühler erforderlich, wodurch dieser zum Einen zwecks Lärmreduzierung mit einer niedrigen Lüfterdrehzahl betreibbar ist und zum Anderen dessen Effizienz vorteilhaft erhöht ist. Mittels geeigneter Steuerung oder Regelung der verschiedenen Komponenten ist es insbesondere möglich, die Leistungskomponente zu kühlen und gleichzeitig den Innenraum wahlweise zu beheizen oder zu kühlen. Dabei ist insbesondere eine Aufnahme von Wärme aus der Umgebung und/oder von der Leistungskomponente möglich sowie eine Wärmeabgabe an die Umgebung oder an den Heizkreis. Zudem ist es vorteilhaft möglich insbesondere bei Nutzung mehrerer Wärmequellen auf einen Zuheizer zur Innenraumklimatisierung zu verzichten oder zumindest dessen Leistung und somit dessen Herstellungskosten zu reduzieren.

Das Klimagerät dient der Klimatisierung, das heißt dem Beheizen oder dem Kühlen des Innenraumes und umfasst dazu zwei Wärmetauscher, wobei der eine Wärmetauscher der Heizungswärmetauscher ist und der andere der Klimagerät-Verdampfer. Der Heizungswärmetauscher ist im Heizkreis angeordnet und dient der Abgabe von Wärme an den Innenraum; der Klimagerät-Verdampfer ist im Kältekreis angeordnet und dient der Aufnahme von Wärme aus dem innenraum im Umluftbetrieb und/oder aus der dem Innenraum zuzuführenden Luft im Außenluftbetrieb in den Kältekreis. Insbesondere ist im Kältekreis stromauf des Klimagerät-Verdampfers ein Ventil angeordnet, das im insbesondere reinen, das heißt ausschließlichen Heizbetrieb geschlossen ist und im Kühlbetrieb als Expansionsorgan dient.

Im Kältekreis ist zwischen dem Klimagerät-Verdampfer und dem Kondensator weiterhin ein Kompressor angeordnet, der insbesondere dem Kondensator verdichtetes Kühlmittel zur Wärmeabgabe an den NT-Kreis zuführt. Zur Leistungssteigerung im Betrieb ist im Kältekreis zweckmäßigerweise zusätzlich ein innerer Wärmetauscher angeordnet, der insbesondere Wärme von der stromauf des Klimagerät-Verdampfers liegenden Seite des Kältekreises auf die stromab desselben liegende Seite fördert. Als zusätzliche Wärmequelle ist im Kältekreis geeigneterweise ein HVS-Verdampfer angeordnet, der vom Hochvoltspeicher, auch als HVS bezeichnet, des Fahrzeuges generierte Abwärme in den Kältekreis aufnimmt und dadurch zum Einen den Hochvoltspeicher kühlt und zum Anderen die Abwärme nutzbar macht.

Der NT-Kreis ist ein Niedrigtemperaturkreis und ein Kühlkreis, beispielsweise ist das Kühlmittel ein Wasser-Glykol-Gemisch und im NT-Kreis liegt je nach Betriebsweise eine Temperatur von etwa -20 bis +60 °C vor. Der NT-Kühler dient dem Austausch von Wärme mit der Umgebung des Fahrzeuges, das heißt insbesondere der Umwelt oder dem Raum auf der Außenseite des Fahrzeuges. Vorzugsweise nimmt der NT-Kühler im Heizbetrieb Wärme auf und gibt im Kühlbetrieb Wärme ab. Mit anderen Worten: zweckmäßigerweise wird im Heizbetrieb über den NT-Kühler Wärme aus der Umgebung in den NT-Kreis aufgenommen wird. Dadurch ist es insbesondere möglich, zusätzliche Wärme zum Heizen bereitzustellen. Dies ist insbesondere dadurch ermöglicht, dass mittels des Wärmetauschers im NT-Kreis eine Temperatur erzeugbar ist, die geringer ist als die Umgebungstemperatur. Vorteilhafterweise erfolgt eine Wärmeaufnahme im Heizbetrieb jedoch lediglich insoweit, als die zum Heizen benötigte Wärme nicht von anderen Wärmequellen entnommen wird.

Die im NT-Kreis angeordnete elektrische Leistungskomponente ist insbesondere eine elektrische Antriebsmaschine, das heißt ein Elektromotor des Fahrzeuges, eine Leistungselektronik, eine Steuerelektronik, ein Gleichspannungswandler, eine Ladeelektronik oder Ähnliches. Dabei wird unter "im NT-Kreis angeordnet" verstanden, dass ein Wärmeaustausch zwischen der Leistungskomponente und dem NT-Kreis, genauer der Kühlflüssigkeit möglich ist. Insbesondere ist es möglich, dass mehrere elektrische Leistungskomponenten vorhanden sind, die im NT-Kreis parallel zueinander geschaltet sind oder seriell oder eine Kombination davon.

Der Heizkreis ist insbesondere ein Teil des NT-Kreises und umfasst einen separaten Heizzweig. Dabei ermöglicht das Umschaltventil je nach Schaltzustand entweder eine Zirkulation von Kühlmittel im Heizkreis oder eine Umgehung des Heizzweiges. Dabei erfolgt im Kühlbetrieb der Wärmepumpenanlage eine Umgehung des Heizzweiges, das heißt eine Nichtbenutzung des Heizkreises und im Heizbetrieb entsprechend die Zirkulation von Kühlflüssigkeit im Heizkreis. Dazu ist im Heizkreis insbesondere eine Heizkreispumpe angeordnet, die lediglich im Heizbetrieb aktiviert ist, das heißt Kühlmittel pumpt. Im Heizbetrieb wird dann der Heizungswärmetauscher des Klimagerätes von Kühlmittel durchströmt und gibt Wärme an den Innenraum ab.

In einer vorteilhaften Weiterbildung ist die Wärmepumpenanlage zusätzlich zu dem Heizbetrieb und dem Kühlbetrieb in einen Mischbetrieb umschaltbar, wodurch es insbesondere möglich, Heiz- und Kühlaufgaben gleichzeitig durchzuführen. Im Mischbetrieb erfolgt dann insbesondere eine Umgehung des Heizkreises durch lediglich eines ersten Anteils des Kühlmittels, während ein zweiter Anteil des Kühlmittels durch den Heizkreis gefördert wird.

Der Kondensator dient der Übertragung von Wärme aus dem Kältekreis in den NT-Kreis und ist je nach verwendetem Kältemittel und Kühlmittel geeignet ausgelegt. Beispielsweise ist der Kondensator ein wassergekühlter Plattenwärmetauscher, das heißt das Kühlmittel ist ein Wasser-Glykol-Gemisch. Alternativ und insbesondere im Fall von R744 als Kältemittel ist der Kondensator ein sogenannter Gaskühler, der jedoch allgemein auch als Kondensator bezeichnet wird. Im Heizbetrieb wird mittels des Kondensators Wärme vom Kältekreis in den NT-Kreis und durch Umleiten der Kühlflüssigkeit in den Heizkreis an den Heizungswärmetauscher übertragen, um schließlich zum Heizen des Innenraumes des Fahrzeuges verwendet zu werden. Im Kühlbetrieb wird die vom Kondensator in den NT-Kreis übertragene Wärme dagegen an den NT-Kühler übergeben und schließlich an die Umgebung des Fahrzeuges abgegeben.

Ein Wärmetauscher ist insbesondere mittels eines Verdampfer-Bypass zum Klimagerät-Verdampfer parallel geschaltet, zur Übertragung von Wärme aus dem NT-Kreis in den Kältekreis im Heizbetrieb. Der Wärmetauscher ist insbesondere ein Verdampfer bezüglich des Kältemittels. Dadurch ist auf besonders einfache Weise eine Nutzung von Wärme aus verschiedenen Wärmequellen ermöglicht. Insbesondere wird im Heizbetrieb mittels des Wärmetauschers die Abwärme der elektrischen Leistungskomponente in den Kältekreis übertragen und von dort mittels des Kondensators in den Heizkreis. Über den Klimagerät-Verdampfer erfolgt hierbei je nach Außentemperatur insbesondere keine Wärmeaufnahme. Im Kühlbetrieb ist der Wärmetauscher deaktiviert, beispielsweise mittels eines im Verdampfer-Bypass angeordneten Ventils und es erfolgt keine Wärmeübertragung auf diesem Wege. Der Wärmetauscher ist vorzugsweise als Plattenwärmetauscher ausgebildet.

In einer vorteilhaften Weiterbildung ist im NT-Kreis ein zuschaltbarer Wärmetauscher-Bypass angeordnet, zum Umgehen des Wärmetauschers oder als paralleler Zweig zu diesem. Der Wärmetauscher erlaubt möglicherweise lediglich einen bestimmten, maximalen Kühlmittelvolumenstrom, insbesondere bei einem durch eine im NT-Kreis angeordnete Kühlkreispumpe gegebenen Druckaufbau. Ist jedoch die von der Leistungskomponente erzeugte Abwärme besonders groß, so ist es durch den Wärmetauscher-Bypass insbesondere möglich, trotz des begrenzten Kühlmittelvolumenstromes durch den Wärmetauscher hindurch dennoch einen zur Kühlung der Leistungskomponente ausreichenden Gesamtkühlmittelvolumenstrom bereitzustellen. Im Wärmetauscher-Bypass ist daher zweckmäßigerweise ein Ventil angeordnet, das insbesondere in diesem Fall den Wärmetauscher-Bypass öffnet und dadurch eine Überhitzung der Leistungskomponente verhindert. Das Ventil ist geeigneterweise ein druckgesteuertes Ventil, beispielsweise ein Überdruckventil.

Der NT-Kühler ist stromab des Wärmetauschers angeordnet. In einer bevorzugten Ausgestaltung sind der Kondensator, der Wärmetauscher und der NT-Kühler im NT-Kreis in Serie geschaltet, wobei der Wärmetauscher zwischen dem Kondensator und dem NT-Kühler angeordnet ist. Durch diese Anordnung ist eine optimale Anordnung bezüglich der Wärmeübertragung realisiert.

In einer weiteren, vorteilhaften Weiterbildung ist der Wärmetauscher im NT-Kreis stromab der elektrischen Leistungskomponente und insbesondere benachbart zu dieser angeordnet. Unter benachbart wird dabei insbesondere in räumlicher Nähe verstanden. Dadurch ist es möglich, den Wärmetauscher besonders nahe an der Leistungskomponente anzuordnen und aufgrund dieser räumlichen Nähe die von der Leistungskomponente erzeugte Abwärme besonders effizient zu nutzen, das heißt mittels des Wärmetauschers in den Kältekreis zu übertragen. Insbesondere bei einer räumlich nahen Anordnung des Kompressors und der Leistungskomponente ist es vorteilhaft möglich, die den Kompressor mit dem Wärmetauscher verbindenden Leitungen hinsichtlich deren Länge zu optimieren, wodurch insbesondere Druckverluste auf einer Niederdruckseite des Kältekreises reduzierbar sind. Dadurch ist es insbesondere möglich, den Kältekreis besonders effizient zu betreiben.

Zur Förderung des Kühlmittels ist im NT-Kreis insbesondere zumindest eine Kühlkreispumpe angeordnet, bevorzugterweise benachbart zum Wärmetauscher und stromauf desselben. Die Kühlkreispumpe generiert typischerweise selbst Abwärme, die durch die Anordnung stromauf bezüglich des Wärmetauschers besonders effizient nutzbar ist. Alternativ ist die Kühlkreispumpe im NT-Kreis stromauf bezüglich des Kondensators angeordnet, wodurch sich insbesondere konstruktionstechnische Vorteile beim Einbau der Kühlkreispumpe im Fahrzeug ergeben. Dabei ist die Kühlkreispumpe insbesondere stromauf einer möglicherweise vorhandenen Aufgabelung des NT-Kreises in mehrere parallel zueinander verlaufende Zweige angeordnet. In einer bevorzugten Ausgestaltung erzeugt die Kühlkreispumpe einen höheren Druck als die Heizkreispumpe, wodurch insbesondere ein Rückfließen von Kühlmittel aus dem Heizkreis in andere Abschnitte des NT-Kreises, das heißt ein Umkehren der Strömungsrichtung in einem Zuleitungsabschnitt zum Heizkreis auf besonders einfache Weise verhindert ist. Alternativ oder zusätzlich ist zum Abschließen des Heizkreises und zum Verhindern einer Strömungsumkehr im Zuleitungsabschnitt ein Rückschlagventil angeordnet.

Bevorzugterweise gibt der Kondensator sowohl im Kühlbetrieb als auch im Heizbetrieb und insbesondere auch im Mischbetrieb Wärme aus dem Kältekreis an den NT-Kreis ab, wodurch der Kondensator somit besonders einfach auslegbar ist. Die Wärme wird demnach in allen Betriebsmodi in die gleiche Richtung übertragen. Dadurch wirkt der Kondensator insbesondere ausschließlich als Kondensator bezüglich des Kältemittels.

In einer weiteren, bevorzugten Ausgestaltung strömt das Kühlmittel im Kühlbetrieb und im Heizbetrieb in gleicher Richtung durch den Kondensator. Auf diese Weise ist eine besonders einfache Verschaltung der Komponenten des NT-Kreises realisierbar. Insbesondere ist auch das Umschalten zwischen Heiz- und Kühlbetrieb dahingehend vereinfacht, dass durch den Verzicht auf eine Umkehr der Strömungsrichtung ein entsprechend schnelles Umschalten möglich ist.

Zur besonders einfachen Realisierung des Heizzweiges ist der Heizkreis in einer bevorzugten Ausgestaltung stromauf und stromab des Kondensators mit dem NT-Kreis verbunden. Dabei umfasst der Heizkreis insbesondere zwei Knotenpunkte, wobei der eine Knotenpunkt einen Einlass des Heizzweiges darstellt und der andere Knotenpunkt einen Auslass. Dabei ist der Einlass stromab des Kondensators angeordnet und der Auslass stromauf. Der Heizzweig erstreckt sich dann insbesondere stromab des Einlasses bis zum Auslass. Insbesondere sind die Heizkreispumpe und der Heizungswärmetauscher auf dem Heizzweig angeordnet.

Das Umschaltventil ist zweckmäßigerweise an einem der Knotenpunkte angeordnet, bevorzugt stromab des Kondensators. Zum Umschalten zwischen Kühlbetrieb und Heizbetrieb ist das Umschaltventil bevorzugterweise als 3/2-Wegeventil ausgestaltet. Diese Ausgestaltung ist besonders einfach und ermöglicht insbesondere ein Umschalten zwischen Heiz- und Kühlbetrieb sowie insbesondere einem Mischbetrieb mittels lediglich eines einzigen Ventils. Für den Heiz- oder Kühlbetrieb wird das Umschaltventil insbesondere derart geschaltet, das der gesamte Volumenstrom entweder in den Heizkreis oder in den NT-Kreis geleitet wird. Der Mischbetrieb ist dann insbesondere durch Hin- und Herschalten, also mittels schnellem Wechseln zwischen Heiz- und Kühlbetrieb ermöglicht. Alternativ ist das 3/2-Wegeventil als sogenanntes Duoventil ausgebildet und ermöglicht im Mischbetrieb zwei kontinuierliche Teilvolumenströme, einen in den NT-Kreis und den anderen in den Heizkreis.

Zweckmäßigerweise ist die elektrische Leistungskomponente parallel zum Kondensators im NT-Kreis angeordnet. Dadurch wird insbesondere vermieden, dass die Leistungskomponente mit dem Kondensator in Serie geschaltet ist und im Heizbetrieb möglicherweise lediglich schlecht gekühlt wird. Mit anderen Worten: durch eine parallele Anordnung von Kondensator und Leistungskomponente ist eine effiziente Kühlung der Leistungskomponente bei gleichzeitigem Heizbetrieb ermöglicht. Insbesondere ermöglicht die parallele Anordnung gleichzeitig eine Kühlung der Leistungskomponente und eine Wärmeabgabe vom Kondensator an den NT-Kreis.

In einer zweckmäßigen Ausgestaltung umfasst der NT-Kreis einen ersten NT-Kühler-Bypass, zur Umgehung des NT-Kühlers. Beim Starten des Fahrzeuges weist die Kühlflüssigkeit möglicherweise eine höhere Temperatur auf als die Außentemperatur des Fahrzeuges. In diesem Fall wird durch Umgehen des NT-Kühlers mittels des ersten NT-Kühler-Bypass ein Wärmeverlust an die Umgebung verhindert. Alternativ oder zusätzlich umfasst der NT-Kreis in einer weiteren zweckmäßigen Ausgestaltung einen zweiten NT-Kühler-Bypass, in dem ein Ausgleichsbehälter zum Druckausgleich oder Füllstandsausgleich im NT-Kreis angeordnet ist.

Insbesondere in Kombination mit der auf die Anmelderin zurückgehenden, unveröffentlichten DE 10 2013 206626.0 ist es möglich, durch die oben beschriebene Anordnung eine besonders effiziente Betriebsweise zu erzielen: der Wärmeübertrag von der Umgebung in den NT-Kreis wird dabei vorteilhaft durch ein Einregeln der Temperatur im NT-Kreis bestimmt. Dazu weist die Wärmepumpenanlage zweckmäßigerweise eine Regelelektronik auf. Dadurch ist es insbesondere möglich mittels des NT-Kühlers genau eine solche Wärmemenge aufzunehmen, wie in Kombination mit der von der Leistungskomponente in den NT-Kreis eingebracht Wärme nötig ist, um ein Vereisen des NT-Kühlers zu vermeiden. Dies ist insbesondere durch die in der DE 10 2013 206626.0 beschriebene Steuerung der von der Leistungskomponente abgegebenen Wärme möglich.

Je nach Außentemperatur oder in Abhängigkeit anderer Umweltbedingungen wird die Wärmepumpenanlage zweckmäßigerweise in einem Mischbetrieb betrieben, wobei insbesondere ein Innenraum des Fahrzeuges entfeuchtet wird und/oder im Heizbetrieb die Leistungskomponente gekühlt wird. Beispielsweise ist es möglich, durch Öffnen des Ventils vor dem Klimagerät-Verdampfer im Heizbetrieb den Innenraum des Fahrzeuges zu entfeuchten. Alternativ ist ein Mischbetrieb derart möglich, dass im Heizbetrieb, also bei Heizen des Innenraumes die Leistungskomponente gekühlt wird. Insbesondere ist es durch ein geeignetes Schalten von Ventilen vor dem Hochvoltspeicher, der Leistungskomponente, dem Klimagerät-Verdampfer und dem Heizungswärmetauscher vorteilhaft möglich, diese jeweils unabhängig voneinander in den Kühl- beziehungsweise Kältekreis zu integrieren. Auf diese Weise ist ein Mischbetrieb realisierbar, bei dem der Innenraum gekühlt, geheizt oder entfeuchtet wird und zugleich eine Kühlung des Hochvoltspeichers und/oder der Leistungskomponente möglich ist. Besonders beim Entfeuchten werden der Heizbetrieb und der Kühlbetrieb zu einem Mischbetrieb kombiniert.

Nachfolgend werden Ausführungsbeispiele der Erfindung anhand einer Zeichnung näher erläutert. Darin zeigen:
Fig. 1 ein erstes Verschaltungsbeispiel einer Wärmepumpenanlage im Kühlbetrieb,
Fig. 2 das Verschaltungsbeispiel gemäß Fig. 1 im Heizbetrieb, und
Fig. 3 ein zweites Verschaltungsbeispiel.

In der Zeichnung ist ohne Beschränkung der Allgemeinheit insbesondere auf die Darstellung von möglicherweise zusätzlicher Sensorik, Steuerelektronik und einem unter Umständen vorhandenen Kältemittelsammler verzichtet.

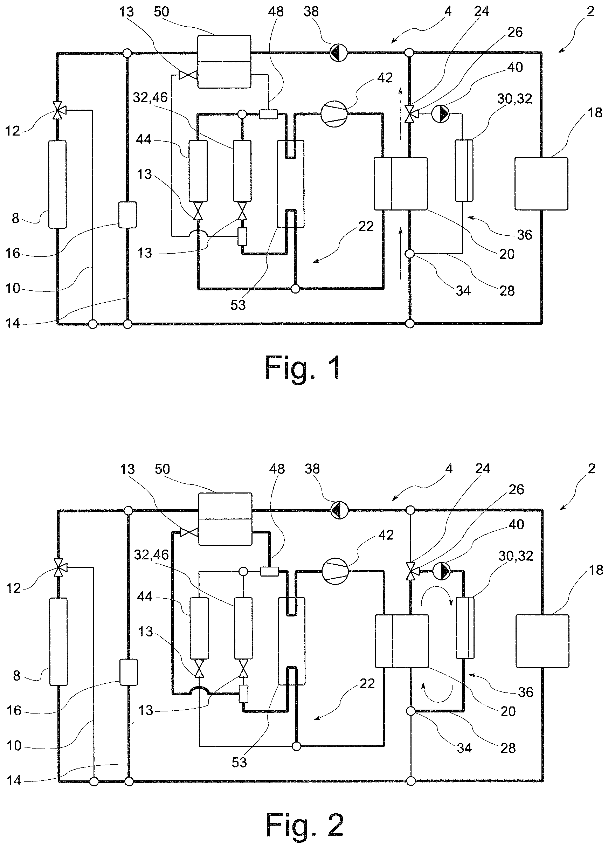

Die Fig. 1 und 2 zeigen ein erstes Verschaltungsbeispiel einer Wärmepumpenanlage 2 eines hier nicht näher dargestellten Fahrzeuges, wobei Fig. 1 die Wärmepumpenanlage 2 im Kühlbetrieb zeigt und Fig. 2 im Heizbetrieb. Die vom Kühlmittel und vom Kältemittel im jeweiligen Betriebsmodus durchlaufenen Pfade sind dabei mit verstärkten Linien dargestellt.

Die Wärmepumpenanlage 2 umfasst einen NT-Kreis 4, in dem das Kühlmittelmittel, beispielsweise ein Wasser-Glykol-Gemisch zirkuliert. In der hier dargestellten Variante ist im NT-Kreis 4 ein NT-Kühler 8 angeordnet, der im Kühlbetrieb Wärme abgibt und im Heizbetrieb Wärme aufnehmen kann. In einem ersten NT-Kühler-Bypass 10 ist ein Ventil 12 angeordnet, das hier als 3/2-Vegeventil ausgebildet ist und zum Umgehen des NT-Kühlers 8, beispielsweise bei der Startphase des Fahrzeuges dient. In einem zweiten NT-Kühler-Bypass 14 ist ein Ausgleichsbehälter 16 angeordnet. Desweiteren ist in dem NT-Kreis 4 zumindest eine elektrische Leistungskomponente 18 angeordnet, die im Betrieb möglicherweise Abwärme abgibt und somit als Wärmequelle dient. Die Abwärme wird in geeigneter Weise auf die Kühlflüssigkeit und damit in den NT-Kreis 4 übergeben. Die Leistungskomponente 18 ist beispielsweise eine oder mehrere der folgenden Komponenten: Hochvoltspeicher, Ladeelektronik, Gleichspannungswandler, elektrische Antriebsmaschine. Alternativ sind mehrere dieser Komponenten im NT-Kreis 4 angeordnet.

Weiterhin ist im NT-Kreis 4 ein Kondensator 20 angeordnet, zur Übertragung von Wärme von einem Kältekreis 22 in den NT-Kreis 4. Der Kondensator 20 ist in dem hier gezeigten Ausführungsbeispiel ein Wärmetauscher, der bezüglich des im Kältekreis 22 zirkulierenden Kältemittels als Kondensator 20 wirkt und dabei Wärme auf das Kühlmittel überträgt. Der Kondensator 20 wirkt in dieser Weise sowohl im Heizbetrieb wie auch im Kühlbetrieb.

Mittels eines Umschaltventils 24 ist die Wärmepumpenanlage 2 zwischen dem Kühlbetrieb und dem Heizbetrieb umschaltbar. Das Umschaltventil 24 ist in der hier gezeigten Ausführungsvariante als 3/2-Wegeventil ausgestaltet und stromab des Kondensators 20 im NT-Kreis 4 angeordnet. Das Umschaltventil 24 markiert zudem einen Einlass 26 zu einem Heizzweig 28 in dem ein Heizungswärmetauscher 30 angeordnet ist, der wiederum ein Teil eines Klimagerätes 32 zur Klimatisierung des hier nicht näher dargestellten Innenraumes des Fahrzeuges ist. Der Heizzweig 28 ist stromauf des Kondensators 20 über einen Auslass 34 mit dem restlichen NT-Kreis 4 verbunden. Der Heizzweig 28 bildet mit demjenigen Abschnitt zwischen Auslass 34 und Einlass 26 auf dem der Kondensator 20 angeordnet ist einen Heizkreis 36, mittels dessen Wärme vom Kondensator 20 zum Heizungswärmetauscher 30 übertragbar ist, zur Beheizung des Innenraumes des Fahrzeuges.

Zur Zirkulation des Kühlmittels ist im NT-Kreis 4 eine Kühlkreispumpe 38 angeordnet und im Heizkreis 36 eine zusätzliche Heizkreispumpe 40.

Der Kondensator 20 entnimmt Wärme aus dem Kältekreis 22. In diesem ist stromauf des Kondensators 20 ein Kompressor 42 angeordnet, der das Kältemittel verdichtet. In dem hier gezeigten Ausführungsbeispiel sind im Kältekreis 22 zwei Verdampfer parallel zueinander geschaltet, wobei der eine Verdampfer ein HVS-Verdampfer 44 ist, der Abwärme von einem Hochvoltspeicher des Fahrzeuges aufnimmt und wobei der andere Verdampfer ein Klimagerät-Verdampfer 46 ist, der Teil des Klimagerätes 32 zur Klimatisierung des Fahrzeuges ist. Stromauf des HVS-Verdampfers 44 und des Klimagerät-Verdampfers 46 ist jeweils ein Ventil 13 angeordnet, das als Expansionsventil wirkt und im Heizbetrieb geschlossen ist. Dazu sind die Ventile 12 beispielsweise als elektrische Expansionsventile, als thermostatische Expansionsventile mit jeweils zusätzlichem Abschaltventil, oder als sogenanntes Orifice mit zusätzlichem Abschaltventil ausgebildet. Der Kältekreis 22 umfasst zudem einen Verdampfer-Bypass 48, über den im Heizbetrieb der Klimagerät-Verdampfer 46 vom Kältemittel umgangen wird, um in einem im Verdampfer-Bypass 48 angeordneten Wärmetauscher 50 Wärme aus dem NT-Kreis 4 aufzunehmen. Dabei wirkt der Wärmetauscher 50 als Verdampfer. Zum Aktivieren des Verdampfer-Bypass 48 ist dem Wärmetauscher 50 ein weiteres Ventil 13 vorgeschaltet, das als Expansionsventil wirkt. Zusätzlich ist in dem hier gezeigten Ausführungsbeispiel im Kältekreis 22 ein innerer Wärmetauscher 52 angeordnet, zur Übertragung von Wärme vom Kältemittel stromauf des Klimagerät-Verdampfers 46 zum Kältemittel stromab des Klimagerät-Verdampfers 46 und vor dem Kompressor 42. In einer hier nicht gezeigten Variante erfolgt eine Aufteilung des Volumenstromes auf den HVS-Verdampfer 44 und den Klimagerät-Verdampfer 46 im Kältekreis 22 nicht wie in den Fig. 1 bis 3 gezeigt stromauf des inneren Wärmetauschers 52, sondern stromab und insbesondere stromauf des Verdampfer-Bypass 48.

Im in Fig. 1 gezeigten Kühlbetrieb, das heißt zum Kühlen des Innenraumes des Fahrzeuges mittels des Klimagerätes 32, wird vom Klimagerät-Verdampfer 46 Wärme in den Kältekreis 22 aufgenommen und über den Kondensator 20 an den NT-Kreis 4 abgegeben. Das Umschaltventil 24 leitet die Kühlflüssigkeit vom Kondensator 20 in Richtung NT-Kühler 8, der die Wärme an die Umgebung abgibt. Gleichzeitig gibt der NT-Kühler 8 auch von der Leistungskomponente 18 erzeugte Wärme an die Umgebung ab. Der Heizzweig 28 ist durch das Umschaltventil 24 gesperrt, der Heizkreis 36 ist inaktiv, die Heizkreispumpe 40 und auch der Wärmetauscher 50 sind im Kühlbetrieb ausgeschaltet.

Im in Fig. 2 gezeigten Heizbetrieb, das heißt zum Beheizen des Innenraumes des Fahrzeuges mittels des Klimagerätes 32, ist das Umschaltventil 24 derart umgeschaltet, dass die Kühlflüssigkeit vom Kondensator 20 in Richtung der Heizkreispumpe 40 geleitet wird und von dieser durch den Heizkreis 36 gepumpt wird. Die vom Kondensator 20 an den NT-Kreis 4 abgegebene Wärme wird auf diese Weise dem Heizzweig 28 und dem darin angeordneten Heizungswärmetauscher 30 zugeführt und zur Beheizung des Innenraumes des Fahrzeuges verwendet. Die dem Kältekreis 22 entnommene Wärme wird dabei in dem hier gezeigten Ausführungsbeispiel im Wesentlichen mittels des Wärmetauschers 50 vom NT-Kreis 4 in den Kältekreis 22 eingebracht und stammt vorrangig von der Leistungskomponente 18. Die Ventile 13 vor dem HVS-Verdampfer 44 und dem Klimagerät-Verdampfer 46 sind geschlossen und das Kältemittel wird über den Verdampfer-Bypass 48 durch den Wärmetauscher 50 geführt. Der NT-Kühler 8 kann hierbei entweder deaktiviert sein oder alternativ zur Aufnahme von Wärme aus der Umgebung verwendet werden. Der Heizkreis 36 ist insbesondere gegenüber dem Rest des NT-Kreises 4 dahingehend abgeschlossen, dass kein im Heizkreis 36 zirkulierendes Kühlmittel in den restlichen NT-Kreis 4 gelangt.

Insbesondere zur Entfeuchtung des Innenraumes des Fahrzeuges und/oder zur gleichzeitigen Kühlung des Hochvoltspeichers des Fahrzeuges im Heizbetrieb ist es möglich, die hier dargestellten Betriebsweisen, das heißt den Heizbetrieb und den Kühlbetrieb in einem Mischbetrieb zu kombinieren. Dazu ist insbesondere in dem in Fig. 2 gezeigten Heizbetrieb das dem Klimagerät-Verdampfer 46 vorgeschaltete Ventil 13 geöffnet.

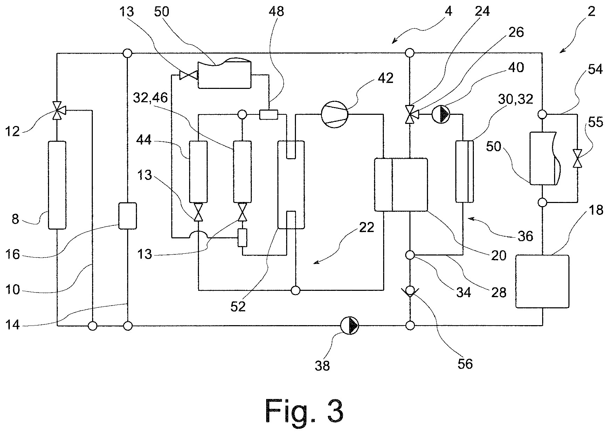

In Fig. 3 ist ein zweites Verschaltungsbeispiel der Wärmepumpenanlage 2 gezeigt. Hierbei ist der Wärmetauscher 50 im NT-Kreis 4 direkt hinter der Leistungskomponente eingebunden. Zur vereinfachten Darstellung ist der Wärmetauscher in Fig. 3 entsprechend geteilt dargestellt. Desweiteren weist der NT-Kreis 4 einen Wärmetauscher-Bypass 54 mit einem Bypass-Ventil 55 auf, zur Umgehung des Wärmetauschers 50. Die Kühlkreispumpe 38 ist zudem stromauf, das heißt drückend bezüglich des Kondensators angeordnet. Weiterhin ist stromauf des Kondensators ein Rückschlagventil 56 im NT-Kreis angeordnet, um im Heizbetrieb einen Rückfluss des Kühlmittels aus dem Heizkreis 36 zu verhindern.

### Bezugszeichenliste

- 2: Wärmepumpenanlage
- 4: NT-Kreis
- 8: NT-Kühler
- 10: erster NT-Kühler-Bypass
- 12: Ventil (3/2-Wegeventil)
- 13: Ventil (Expansionsventil)
- 14: zweiter NT-Kühler-Bypass
- 16: Ausgleichsbehälter
- 18: Leistungskomponente
- 20: Kondensator
- 22: Kältekreis
- 24: Umschaltventil
- 26: Einlass
- 28: Heizzweig
- 30: Heizungswärmetauscher
- 32: Klimagerät
- 34: Auslass
- 36: Heizkreis
- 38: Kühlkreispumpe
- 40: Heizkreispumpe
- 42: Kompressor
- 44: HVS-Verdampfer
- 46: Klimagerät-Verdampfer
- 48: Verdampfer-Bypass
- 50: Wärmetauscher
- 52: innerer Wärmetauscher
- 54: Wärmetauscher-Bypass
- 55: Bypass-Ventil
- 56: Rückschlagventil

## Patentansprüche

1. Wärmepumpenanlage (2) zur Klimatisierung eines Fahrzeuges, insbesondere Elektro- oder Hybridfahrzeug, mit einem Klimagerät (32), das einen Heizungswärmetauscher (30) sowie einen Klimagerät-Verdampfer (46) umfasst, mit einem Kältekreis (22), in dem der Klimagerät-Verdampfer (46) sowie ein Kondensator (20) angeordnet sind, mit einem NT-Kreis (4), in dem zumindest eine elektrische Leistungskomponente (18) angeordnet ist, wobei die Wärmepumpenanlage (2) zwischen einem Kühlbetrieb und einem Heizbetrieb umschaltbar ist, wobei
- in den NT-Kreis (4) ein Kondensator (20) zur Übertragung von Wärme in den NT-Kreis (4) eingebunden ist sowie ein NT-Kühler (8),
- ein Umschaltventil (24) zum Umschalten zwischen Heizbetrieb und Kühlbetrieb angeordnet ist,
- im Heizbetrieb der Kondensator (20) Wärme in den NT-Kreis (4) und von dort in einen Heizkreis (36) abgibt, in dem der Heizungswärmetauscher (30) angeordnet ist, und
- im Kühlbetrieb der Kondensator (20) Wärme über den NT-Kreis (4) an den NT-Kühler (8) abgibt,
- ein Wärmetauscher (50) zum Klimagerät-Verdampfer (46) parallel geschaltet ist, zur Übertragung von Wärme aus dem NT-Kreis (4) in den Kältekreis (22) im Heizbetrieb,
**dadurch gekennzeichnet, dass** der NT-Kühler (8) stromab des Wärmetauschers (50) angeordnet ist.

2. Wärmepumpenanlage (2) nach dem vorhergehenden Anspruch,
**dadurch gekennzeichnet,**
**dass** das Umschalten zwischen dem Heizbetrieb und dem Kühlbetrieb mittels lediglich des Umschaltventils erfolgt.

3. Wärmepumpenanlage (2) nach einem der vorhergehenden Ansprüche,
**dadurch gekennzeichnet,**
**dass** im NT-Kreis (4) ein zuschaltbarer Wärmetauscher-Bypass (54) angeordnet ist, zum Umgehen des Wärmetauschers (50).

4. Wärmepumpenanlage (2) nach einem der Ansprüche 2 oder 3,
**dadurch gekennzeichnet,**
**dass** der Kondensator (20), der Wärmetauscher (50) und der NT-Kühler (8) im NT-Kreis in Serie geschaltet sind, wobei der Wärmetauscher (50) zwischen dem Kondensator (20) und dem NT-Kühler (8) angeordnet ist.

5. Wärmepumpenanlage (2) nach einem der Ansprüche 2 bis 4,
**dadurch gekennzeichnet,**
**dass** der Wärmetauscher (50) im NT-Kreis (4) stromab der elektrischen Leistungskomponente (18) angeordnet ist.

6. Wärmepumpenanlage (2) nach einem der vorhergehenden Ansprüche,
**dadurch gekennzeichnet,**
**dass** diese zusätzlich zu dem Heizbetrieb und dem Kühlbetrieb in einen Mischbetrieb umschaltbar ist.

7. Wärmepumpenanlage (2) nach einem der vorhergehenden Ansprüche,
**dadurch gekennzeichnet,**
**dass** sowohl im Kühlbetrieb als auch im Heizbetrieb der Kondensator (20) Wärme aus dem Kältekreis (22) an den NT-Kreis (4) abgibt.

8. Wärmepumpenanlage (2) nach einem der vorhergehenden Ansprüche,
**dadurch gekennzeichnet,**
**dass** im Kältekreis (22) ein innerer Wärmetauscher (52) angeordnet.

9. Wärmepumpenanlage (2) nach einem der vorhergehenden Ansprüche,
**dadurch gekennzeichnet,**
**dass** im Kühlbetrieb und im Heizbetrieb das Kühlmittel in gleicher Richtung durch den Kondensator (20) strömt.

10. Wärmepumpenanlage (2) nach einem der vorhergehenden Ansprüche,
**dadurch gekennzeichnet,**
**dass** der Heizkreis (36) stromauf und stromab des Kondensators (20) mit dem NT-Kreis (4) verbunden ist.

11. Wärmepumpenanlage (2) nach einem der vorhergehenden Ansprüche,
**dadurch gekennzeichnet,**
**dass** zum Umschalten zwischen Kühlbetrieb und Heizbetrieb das Umschaltventil (24) als 3/2-Wegeventil ausgestaltet ist.

12. Wärmepumpenanlage (2) nach einem der vorhergehenden Ansprüche,
**dadurch gekennzeichnet,**
**dass** die zumindest eine elektrische Leistungskomponente (18) bezüglich des Kondensators (20) parallel im NT-Kreis (4) angeordnet ist.

13. Wärmepumpenanlage (2) nach einem der vorhergehenden Ansprüche,
**dadurch gekennzeichnet,**
**dass** im NT-Kreis (4) ein erster NT-Kühler-Bypass (10) zur Umgehung des NT-Kühlers (8) angeordnet ist.

14. Verfahren zum Betrieb einer Wärmepumpenanlage (2) nach einem der vorhergehenden Ansprüche, wobei mittels eines Umschaltventils (24) vom Heizbetrieb in den Kühlbetrieb oder umgekehrt umgeschaltet wird.

15. Verfahren nach dem vorhergehenden Anspruch,
**dadurch gekennzeichnet,**
**dass** die Wärmepumpenanlage (2) in einem Mischbetrieb betrieben wird, wobei insbesondere ein Innenraum des Fahrzeuges entfeuchtet wird und/oder im Heizbetrieb die Leistungskomponente (18) gekühlt wird.

16. Verfahren nach einem der beiden vorhergehenden Ansprüche,
**dadurch gekennzeichnet,**
**dass** im Heizbetrieb über den NT-Kühler (8) Wärme aus der Umgebung in den NT-Kreis (4) aufgenommen wird.

## Claims

1. Heat pump system (2) for the climate control of a vehicle, in particular an electric or hybrid vehicle, with an air conditioning unit (32) which comprises a heating heat exchanger (30) and an air conditioning unit evaporator (46), with a refrigerant circuit (22), in which the air conditioning unit evaporator (46) and a condenser (20) are arranged, with a low temperature circuit (4), in which at least one electric power component (18) is arranged, it being possible for the heat pump system (2) to be switched over between a cooling mode and a heating mode,
- a condenser (20) for the transfer of heat into the low temperature circuit (4) and a low temperature radiator (8) being incorporated into the low temperature circuit (4),
- a switchover valve (24) being arranged for switching over between the heating mode and the cooling mode,
- the condenser (20) outputting heat in the heating mode into the low temperature circuit (4) and from there into a heating circuit (36), in which the heating heat exchanger (30) is arranged, and
- the condenser (20) outputting heat in the cooling mode via the low temperature circuit (4) to the low temperature radiator (8),
- a heat exchanger (50) being connected in parallel with the air conditioning unit evaporator (46), for the transfer of heat from the low temperature circuit (4) into the refrigerant circuit (22) in the heating mode,
**characterized in that** the low temperature radiator (8) is arranged downstream of the heat exchanger (50).

2. Heat pump system (2) according to the preceding claim, **characterized in that** the switchover between the heating mode and the cooling mode takes place by means of merely the switchover valve.

3. Heat pump system (2) according to either of the preceding claims, **characterized in that** a switchable heat exchanger bypass (54) is arranged in the low temperature circuit (4), for bypassing the heat exchanger (50).

4. Heat pump system (2) according to either of Claims 2 and 3, **characterized in that** the condenser (20), the heat exchanger (50) and the low temperature radiator (8) are connected in series in the low temperature circuit, the heat exchanger (50) being arranged between the condenser (20) and the low temperature radiator (8).

5. Heat pump system (2) according to one of Claims 2 to 4, **characterized in that** the heat exchanger (50) is arranged in the low temperature circuit (4) downstream of the electric power component (18).

6. Heat pump system (2) according to one of the preceding claims, **characterized in that**, in addition to the heating mode and the cooling mode, it can be switched over into a mixed mode.

7. Heat pump system (2) according to one of the preceding claims, **characterized in that** the condenser (20) outputs heat from the refrigerant circuit (22) to the low temperature circuit (4) both in the cooling mode and in the heating mode.

8. Heat pump system (2) according to one of the preceding claims, **characterized in that** an inner heat exchanger (52) is arranged in the refrigerant circuit (22) .

9. Heat pump system (2) according to one of the preceding claims, **characterized in that** the coolant flows through the condenser (20) in the same direction in the cooling mode and in the heating mode.

10. Heat pump system (2) according to one of the preceding claims, **characterized in that** the heating circuit (36) is connected to the low temperature circuit (4) upstream and downstream of the condenser (20).

11. Heat pump system (2) according to one of the preceding claims, **characterized in that** the switchover valve (24) is configured as a 3/2-way valve for switching over between the cooling mode and the heating mode.

12. Heat pump system (2) according to one of the preceding claims, **characterized in that** the at least one electric power component (18) is arranged in parallel in the low temperature circuit (4) with regard to the condenser (20).

13. Heat pump system (2) according to one of the preceding claims, **characterized in that** a first low temperature bypass (10) for bypassing the low temperature radiator (8) is arranged in the low temperature circuit (4) .

14. Method for operating a heat pump system (2) according to one of the preceding claims, switching over from the heating mode into the cooling mode and vice versa being carried out by means of a switchover valve (24) .

15. Method according to the preceding claim, **characterized in that** the heat pump system (2) is operated in a mixed mode, an interior compartment of the vehicle, in particular, being dehumidified and/or the power component (18) being cooled in the heating mode.

16. Method according to either of the two preceding claims, **characterized in that** heat from the surroundings is absorbed into the low temperature circuit (4) via the low temperature radiator (8) in the heating mode.

## Revendications

1. Installation de pompe à chaleur (2) permettant la climatisation d'un véhicule, en particulier d'un véhicule électrique ou hybride, comprenant un climatiseur (32) qui comprend un échangeur de chaleur de chauffage (30) ainsi qu'un évaporateur de climatiseur (46), comprenant un circuit frigorifique (22) dans lequel sont disposés l'évaporateur de climatiseur (46) ainsi qu'un condensateur (20), comprenant un circuit basse température (4) dans lequel est disposé au moins un composant de puissance électrique (18), l'installation de pompe à chaleur (2) pouvant passer d'un mode refroidissement à un mode chauffage, dans laquelle
- un condensateur (20) pour transmettre de la chaleur dans le circuit basse température (4) et un refroidisseur basse température (8) sont intégrés dans le circuit basse température (4),
- une soupape d'inversion (24) permettant de passer du mode chauffage au mode refroidissement est disposée,
- en mode chauffage, le condensateur (20) distribue de la chaleur dans le circuit basse température (4) et de là dans un circuit de chauffage (36) dans lequel est disposé l'échangeur de chaleur de chauffage (30), et
- en mode refroidissement, le condensateur (20) distribue de la chaleur au refroidisseur basse température (8) en passant par le circuit basse température (4),
- un échangeur de chaleur (50) est connecté en parallèle à l'évaporateur de climatiseur (46) pour transmettre de la chaleur du circuit basse température (4) au circuit frigorifique (22) en mode chauffage,
**caractérisée en ce que** le refroidisseur (8) est disposé en aval de l'échangeur de chaleur (50).

2. Installation de pompe à chaleur (2) selon la revendication précédente, **caractérisée en ce que** le passage du mode chauffage au mode refroidissement est effectué uniquement à l'aide de la soupape d'inversion.

3. Installation de pompe à chaleur (2) selon l'une quelconque des revendications précédentes, **caractérisée en ce que** dans le circuit basse température (4), une dérivation d'échangeur de chaleur (54) pouvant être mise en circuit est disposée pour contourner l'échangeur de chaleur (50).

4. Installation de pompe à chaleur (2) selon l'une quelconque des revendications 2 ou 3, **caractérisée en ce que** le condensateur (20), l'échangeur de chaleur (50) et le refroidisseur basse température (8) sont connectés en série dans le circuit basse température, l'échangeur de chaleur (50) étant disposé entre le condensateur (20) et le refroidisseur basse température (8) .

5. Installation de pompe à chaleur (2) selon l'une quelconque des revendications 2 à 4, **caractérisée en ce que** l'échangeur de chaleur (50) est disposé dans le circuit basse température (4) en aval du composant de puissance électrique (18).

6. Installation de pompe à chaleur (2) selon l'une quelconque des revendications précédentes, **caractérisée en ce qu'**en plus du mode chauffage et du mode refroidissement, elle peut passer dans un mode mixte.

7. Installation de pompe à chaleur (2) selon l'une quelconque des revendications précédentes, **caractérisée en ce qu'**aussi bien en mode refroidissement qu'en mode chauffage, le condensateur (20) distribue de la chaleur du circuit frigorifique (22) au circuit basse température (4).

8. Installation de pompe à chaleur (2) selon l'une quelconque des revendications précédentes, **caractérisée en ce qu'**un échangeur de chaleur intérieur (52) est disposé dans le circuit frigorifique (22).

9. Installation de pompe à chaleur (2) selon l'une quelconque des revendications précédentes, **caractérisée en ce qu'**en mode refroidissement et en mode chauffage, l'agent de refroidissement circule dans le même sens à travers le condensateur (20).

10. Installation de pompe à chaleur (2) selon l'une quelconque des revendications précédentes, **caractérisée en ce que** le circuit (36) est relié au circuit basse température (4) en amont et en aval du condensateur (20) .

11. Installation de pompe à chaleur (2) selon l'une quelconque des revendications précédentes, **caractérisée en ce que** pour le passage entre le mode refroidissement et le mode chauffage la soupape d'inversion (24) est réalisée comme une soupape 3/2 voies.

12. Installation de pompe à chaleur (2) selon l'une quelconque des revendications précédentes, **caractérisée en ce que** ledit au moins un composant de puissance électrique (18) est disposé dans le circuit basse température (4) en parallèle par rapport au condensateur (20).

13. Installation de pompe à chaleur (2) selon l'une quelconque des revendications précédentes, **caractérisée en ce qu'**une première dérivation de refroidisseur basse température (10) est disposée dans le circuit basse température (4) pour contourner le refroidisseur basse température (8).

14. Procédé d'exploitation d'une installation de pompe à chaleur (2) selon l'une quelconque des revendications précédentes, dans lequel une soupape d'inversion (24) permet de passer du mode chauffage au mode refroidissement ou vice versa.

15. Procédé selon la revendication précédente, **caractérisé en ce que** l'installation de pompe à chaleur (2) est exploitée dans un mode mixte dans lequel en particulier un habitacle du véhicule est déshumidifié et/ou dans le mode chauffage le composant de puissance (18) est refroidi.

16. Procédé selon les deux revendications précédentes, **caractérisé en ce qu'**en mode chauffage, le refroidisseur basse température (8) absorbe de la chaleur de l'environnement dans le circuit basse température (4).
